Europäisches Patentamt

**European Patent Office**

**Office européen des brevets**

(11) Numéro de publication: **0 276 621 B1**

(12) **FASCICULE DE BREVET EUROPEEN**

(45) Date de publication de fascicule du brevet: **26.02.92** (51) Int. Cl.⁵: **E04H 4/12**

(21) Numéro de dépôt: **87480022.0**

(22) Date de dépôt: **07.12.87**

(54) **Dispositif pour filtrer l'eau d'une piscine à débordement à l'aide d'un bac tampon faisant office de filtre gravitaire.**

(30) Priorité: **31.12.86 FR 8618487**

(43) Date de publication de la demande:
**03.08.88 Bulletin 88/31**

(45) Mention de la délivrance du brevet:
**26.02.92 Bulletin 92/09**

(84) Etats contractants désignés:
**AT BE CH DE ES GB GR IT LI LU NL SE**

(56) Documents cités:
**EP-A- 0 003 491      DE-A- 2 059 261**
**DE-A- 3 320 619      FR-A- 2 353 693**
**GB-A- 1 232 572      US-A- 3 034 653**
**US-A- 3 386 419      US-A- 3 493 116**
**US-A- 4 105 555**

(73) Titulaire: **AOUASUD PISCINES S.A.R.L.**
**472 Boulevard de Lattre de Tassigny**
**F-83600 Frejus(FR)**

(72) Inventeur: **Aubert, Robert**
**472 avenue de Lattre de Tassigny**
**F-83600 Fréjus(FR)**
Inventeur: **Flaquet, Albert**
**Villa Contemporaine Colomars**
**F-06670 Saint Martin du Var(FR)**

(74) Mandataire: **Hautier, Jean-Louis**
**Cabinet Hautier Office Méditerranéen de**
**Brevets d'Invention et de Marques 24 rue**
**Masséna**
**F-06000 Nice(FR)**

# Description

La présente invention concerne un bac tampon pour piscine à débordement régulant la hauteur du niveau de l'eau dans la piscine.

Cette invention constitue un perfectionnement du dispositif décrit dans le brevet FR-A-2.531.474. Ce brevet décrit l'exécution d'une piscine à déversoir et appartient à l'auteur du présent brevet.

Il existe des dispositifs pour filtrer l'eau d'une piscine comportant un filtre gravitaire. Le brevet 2 576 521 déposé le 30 janvier 1985 décrit en substance un dispositif comprenant un réservoir renfermant un milieu filtrant granulaire, comportant une ouverture d'entrée de l'eau à filtrer et une ouverture de sortie de l'eau à filtrer. Le milieu filtrant comprend une couche de sable recouverte par une couche d'un milieu filtrant granulaire de densité inférieure à celle du sable tel que de l'anthracite.

Le milieu filtrant est séparé de l'ouverture d'entrée de l'eau à filtrer par une paroi filtrante présentant des ouvertures dont la dimension est inférieure au diamètre moyen des grains du milieu filtrant, cette dimension des ouvertures étant supérieure à celle des impuretés retenues dans le milieu filtrant.

L'inconvénient majeur de ce dispositif est que le médium filtrant est contenu dans un grand récipient circulaire qui est intercalé sur le circuit d'eau après la pompe.

Cet élément indépendant ne peut être pratiquement utilisé que dans les installations de piscine uniquement de petites dimensions, pour les piscines de plus grandes dimensions, il est nécessaire d'utiliser une vitesse de filtration ou vitesse de circulation d'eau très faible car une vitesse de filtration trop élevée donne un mauvais résultat, en raison de ce que le front d'avancée de la colmatation qui se crée dans le filtre concerné, risque d'atteindre le mécanisme de reprise de fond de filtre.

Il se crée alors des cheminements préférentiels tout à fait néfaste à la bonne rétention des plus fines particules.

Il est donc nécessaire de procéder à des nettoyages fréquents de filtre, ce qui augmente le coût de la maintenance.

Dans le cas d'une piscine à débordement, il est impératif de disposer un préfiltre avant la pompe et un filtre après la pompe donc d'augmenter le nombre de canalisation, locaux techniques etc. Le travail du filtre se fait actuellement dans la majorité des cas en pression et non en décantation. La surface filtrante traitée peut, pour une piscine de maison individuelle, être inférieure à un mètre carré.

FR-A-2.353.693 : L'invention a pour objet un bloc mixte étagé notamment pour les piscines, caractérisé en ce qu'il se compose de deux caissons étanches superposés et démontables, le caisson supérieur de forme parallélépipédique, recevant les différents organes de distribution d'aspiration et de chauffage de l'eau, tandis que le caisson inférieur de forme cylindrique reçoit le dispositif de filtration, ce bloc mixte étagé étant destiné à être enterré à proximité de la piscine et en ce que l'échangeur, relatif au moyen de chauffage disposé dans le caisson supérieur étanche, plonge dans la masse filtrante de tout type connu, pour réchauffer l'eau lors du filtrage.

Il est clair que ce brevet décrit un bloc mixte formé par l'adjonction de deux caissons étanches, ayant chacun une fonction spécifique, l'un, la distribution d'aspiration et de chauffage de l'eau, l'autre, le dispositif de filtration. Il est clair que ce bloc mixte n'est pas destiné à une piscine à débordement. Il est impératif, dans le cas d'une piscine à débordement, d'interposer un bac tampon. Ce bloc mixte est destiné aux piscines de petites dimensions, il est utile pour réduire considérablement les frais d'un local technique en un mini local technique. Il s'applique aux piscines préfabriquées.

Il n'y a pas de pompe immergée.

Le bac tampon selon l'invention permet de remédier à ces inconvénients et présente les caractéristiques de la revendication 1.

L'un des nombreux avantages de cette invention est que le bac tampon faisant office de filtre peut être unique et construit selon les mêmes caractéristiques que la piscine. En ce sens que la surface et le volume de ce dispositif peuvent parfaitement s'adapter au bassin ou être préfabriqués par un ou plusieurs éléments selon les critères du bassin à traiter.

Le bac tampon faisant office de filtre et de préfiltre pour piscine à débordement permet un filtrage de l'eau par décantation. La surface de l'eau filtrée peut être pour une piscine pour maison individuelle de quatre à cinq mètres/carré de surface filtrante. Il n'est pas nécessaire d'augmenter le nombre de canalisation, il suffit d'utiliser le local technique utilisé où se trouve déjà le bac tampon qui fait office de préfiltre et de filtre et dont le volume peut être environ de six à huit mètres/cubes . L'entretien du filtre selon l'invention est moins fréquent et très aisé, par simple inversion du sens du courant et/ou d'air comprimé au niveau de la masse filtrante dans ledit bac tampon.

Le bac tampon pour piscine à débordement est caractérisé par le fait qu'il fait également office de filtre.

A cet effet, le bac tampon comporte dans sa partie basse une ou plusieurs couches filtrantes dans lesquelles sont disposées au fond de la dernière couche filtrante une ou plusieurs crépines reliées à une canalisation de sortie qui permet le retour de l'eau filtrée vers la piscine. Le retour de l'eau après décantation et filtrage est assurée par une pompe.

Pour le nettoyage de la partie filtrante, le circuit de filtration peut également être branché à un surpresseur qui envoie de l'air dans le sens inverse du sens précédent et/ou de l'eau pour refoulement en fond de bac tampon au moyen d'une autre pompe ou de la même pompe qui est à inversion de sens de fonctionnement.

L'eau en surface dudit bac tampon déborde dans un trop plein avec toutes les impuretés qui sont évacuées par un circuit de vidange branché sur ce trop plein.

Selon un mode de réalisation préféré, les circuits de filtration et d'arrivée d'air et d'eau pour le nettoyage sont mis en place dans un puits étanche qui contient au moins une pompe immergée. La partie basse du puits étanche est reliée à des crépines.

Dans la partie basse du bac tampon se trouve donc une ramification de crépines noyées dans une couche filtrante et reliées à la partie inférieure. Lesdites crépines sont reliées à une canalisation sur laquelle est montée une pompe aspirante et refoulante. Cette pompe est immergée dans un puits étanche fermé par un couvercle.

La pompe est branchée sur une autre canalisation qui sort du puits étanche par son couvercle. Cette canalisation peut comporter un raccord à plusieurs voies avec des vannes ou robinets qui permettent, l'un le retour de l'eau filtrée vers la piscine, l'autre l'alimentation en eau filtrée par exemple d'une fontaine, la troisième voie permet d'inverser le sens du courant au moyen de la même pompe à inversion de sens de marche ou par une autre pompe.

Sur le puits, dans sa partie supérieure, une voie de sortie avec un robinet permet de vidanger la piscine.

Enfin, il est possible qu'une canalisation arrive dans le puits ou par l'extérieur du puits jusqu'aux crépines. Cette canalisation permet de brancher un compresseur qui permet de renvoyer de l'air comprimé dans les crépines.

Les pompes sont commandées par un système de télécommande en technologie approprié électrique ou autre. Un asservissement électronique solidaire du puits assure les fonctions de filtration de l'eau de la piscine, le nettoyage de la masse filtrante, et notamment, le niveau constant de la piscine, la mise en service du filtre selon le niveau de présentation de la piscine, la mise en fonctionnement de la filtration selon la fréquentation de la piscine.

Le bac tampon selon l'invention comporte un moyen de nettoyage de la masse filtrante par inversion du sens du courant d'eau, par la canalisation intérieure au puits qui reçoit l'eau qui est envoyée dans un sens inverse, par inversion du sens du courant, soit par une autre pompe, soit par la pompe dont le sens d'action est alors inversé ; le refoulement de l'eau par les crépines crée une agitation de la masse filtrante faisant remonter les impuretés à la surface du niveau du bac tampon où elles sont récupérées par débordement dans une goulotte dudit bac tampon, et évacuées par une canalisation de vidange.

Le bac tampon selon l'invention est caractérisé par le fait que le moyen de nettoyage comporte, branchée sur la canalisation, une arrivée d'air comprimé qui entre pour créer, par refoulement, des bulles et une agitation de la masse filtrante, en vue du nettoyage du filtre.

Le bac tampon selon l'invention est caractérisé par le fait que le puits étanche est fermé par un couvercle amovible étanche.

Le bac tampon selon l'invention est caractérisé par le fait que la canalisation de sortie intérieure ou directement le puits étanche est branché sur une arrivée d'air qui est alimentée par un compresseur d'air.

Les dessins ci-joints donnés à titre d'exemples indicatifs et non limitatifs permettront de comprendre aisément l'invention. Ils représentent un mode de réalisation préféré selon l'invention.

La figure 1 est une vue schématique d'un bac tampon pour piscine à débordement qui fait en même temps office de filtre.

La figure 2 est une vue schématique, vue en coupe du bac tampon avec un détail de la piscine et de sa goulotte de débordement.

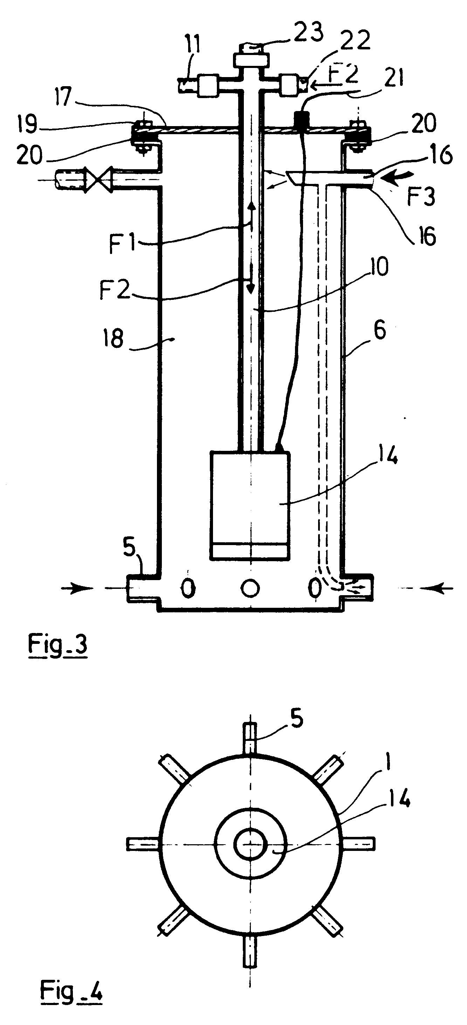

La figure 3 est une vue en coupe du puits.

La figure 4 est une vue du puits selon la figure 3 vue de dessus.

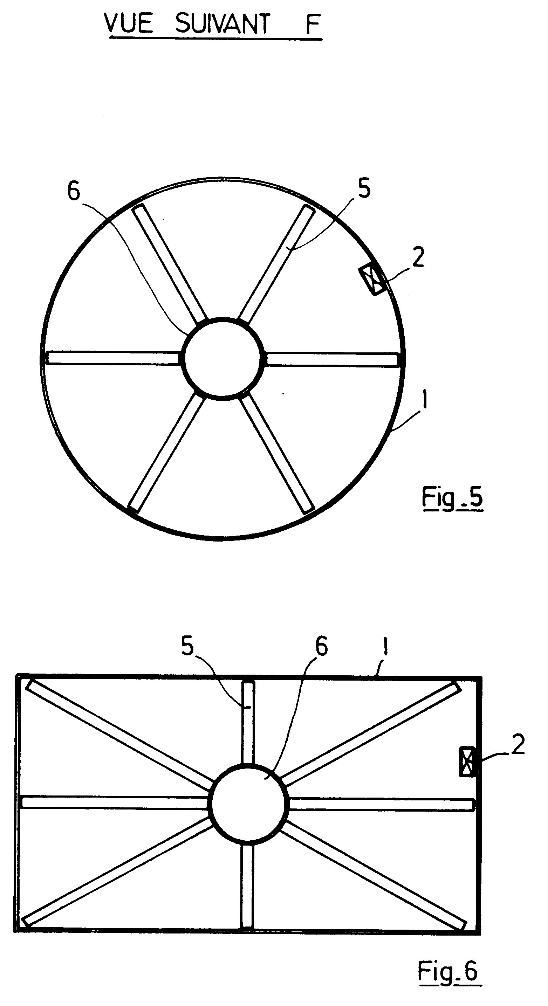

La figure 5 est une vue en plan d'un bac tampon cylindrique.

La figure 6 est une vue en plan d'un bac tampon parallélépipédique.

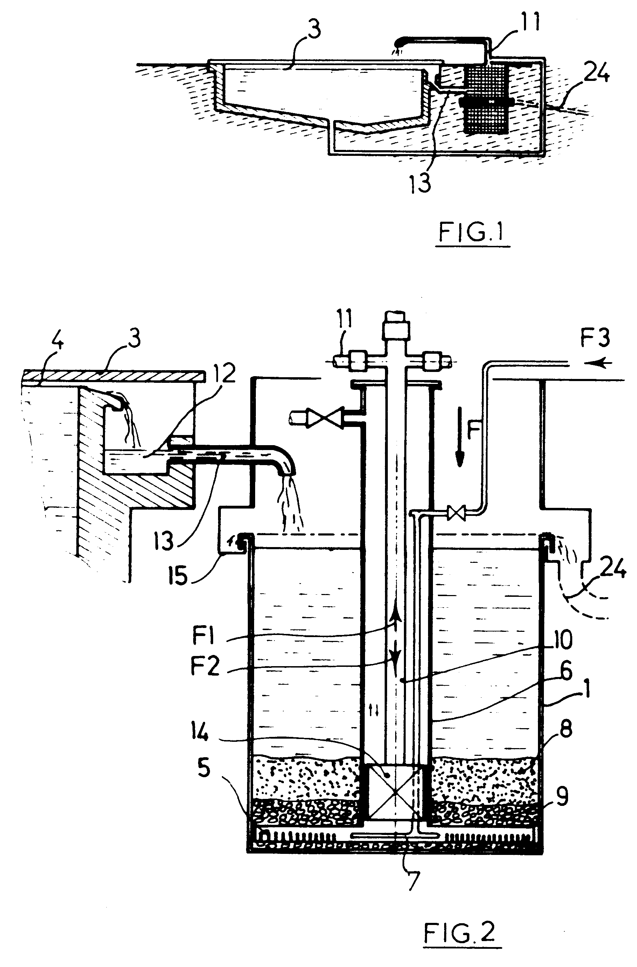

Dans les figures 1 et 2, le bac tampon 1 fait office simultanément de préfiltre, de filtre et de local technique. Un asservissement électronique 2 assure différentes fonctions et notamment, la mise et le maintien à niveau constant 4 de la piscine 3, la mise en service du filtre selon la fréquentation de la piscine, la mise en marche de la filtration selon la force du vent et l'injection d'air en provenance d'un suppresseur extérieur, non représenté sur les figures.

Dans la partie inférieure de ce bac tampon 1, nous trouvons une ramification de crépines 5 raccordée au fond 7 du puits 6 et qui sert à la reprise d'eau filtrée en bas du bac tampon 1 au milieu de la masse filtrante 8, 9. Ces crépines 5 sont disposées radialement et leur longueur tiennent compte de la configuration de la forme du bac tampon 1.

Ces crépines débouchent dans la partie inférieure du bac tampon 1.

Dans une version non préfabriquée du bac tampon (figure 6), celui-ci est construit sur mesure et s'intègre harmonieusement à la piscine 3 dont il peut devenir une pièce totalement intégrée.

On sait qu'une bonne épuration d'eau de piscine nécessite une filtration lente et un nombre de recyclage important et complet du volume d'eau traitée. Il faut un filtre de grande dimension pour obtenir un tel résultat. Le bac tampon 1 permet de filtrer un grand volume d'eau pour un volume filtrant plus grand et moins encombrant que les filtres usuels.

Ce résultat, à savoir vitesse de circulation faible et nombre élevé de recyclage est d'autant plus important que le taux de fréquentation maximale est important. Pour obtenir la lenteur du passage de l'eau dans le sable, il faut impérativement augmenter la section du filtre ce que permet d'obtenir la présente invention qui assure une vitesse de filtration à débit égal de quarante deux mètres cubes/heure/mètre carré pour un filtre classique à deux mètres cubes/heure/mètre carré pour le présent bac tampon. A titre d'exemple, nous précisons qu'une piscine à déversoir ouvert sera recyclée en six heures avec un débit maximum de quatorze mètres cubes/heure grâce à ladite invention.

Les crépines 5 sont noyées dans une masse filtrante 8, 9. Cette masse filtrante 8, 9 est constituée dans sa partie supérieure d'une couche de sable de silice 8 dans sa forme la plus pure par une multitude de grains de quartz 2, dépourvus d'éléments hétérogènes et comprenant des grains de quartz de dimension d'environ 0,5mm et un coefficient d'uniformité de 80 à 85%. La couche de quartz possède une épaisseur adéquate pour que le "front de pénétration" du colmatage descende avec une rapidité compatible à l'égard des dimensions du bac tampon 1. Une sous couche de graviers 9 assure comme sous bassement un meilleur drainage de l'eau vers les crépines 5 que ladite sous couche 9 englobe totalement.

Le réseau de crépines 5 est branché au fond du puits 6 et est relié à une canalisation intérieure 10 du puits qui permet le retour de l'eau filtrée selon les flèches F1. Cette eau est canalisée et rejetée par la canalisation 11 pour le remplissage de la piscine 3, tandis que la piscine 3 déborde dans sa goulotte de débordement 12. La goulotte de débordement 12 est reliée par une canalisation 13 qui déverse l'eau qui déborde vers le bac tampon 1 qui régule automatiquement la hauteur d'eau dans la piscine 3 selon une technique connue au moyen de l'asservissement électronique 2.

Une pompe 14 est immergée dans un puits 6. Cette pompe 14 permet de récupérer l'eau, après filtrage, par les crépines 5 et évacuation vers la piscine par la canalisation 11 ou par la canalisation 23 qui peut, par exemple, alimenter une fontaine.

De manière à permettre le nettoyage de la masse filtrante 8, 9, il est possible d'inverser le sens de la circulation de l'eau. La pompe 14, si elle est à inversion de sens de fonctionnement ou une autre pompe(non représentée sur les figures), permet de renvoyer l'eau selon les flèches F2. Cette eau arrive par la canalisation 22 qui peut être branchée, par exemple, sur la piscine 3 elle-même ou sur l'alimentation générale en eau. L'eau arrivant dans le sens de la flèche F2 refoule la matière filtrante 8, 9 qui est remuée, le surplus d'eau sort par une goulotte de débordement périphérique 15 qui récupère l'eau et les impuretés qui remontent par brassage vers la surface. Cette goulotte de débordement 15 est branchée sur une canalisationd'évacuation 24 des eaux sales qui sont rejetées.

Selon un autre mode de réalisation, la canalisation 10 ou directement le puits étanche 6 peuvent être également branchés sur une arrivée d'air 16 qui est alimentée par un compresseur d'air (non représenté sur les figures). L'air est injecté selon la flèche F3, l'air forme des bulles qui permettent une agitation de la masse filtrante 8, 9 puis une récupération des impuretés contenues dans la masse filtrante 8, 9 et qui remontent à la surface par refoulement de l'eau, débordement dans la goulotte 15 et évacuation pour vidange par la canalisation 24.

L'étanchéité entre le couvercle 17 et le corps 18 du puits 6 est assurée par des boulons 19 et des joints toriques 20. Le fil électrique 21 alimente et commande l'action de la pompe 14.

**Revendications**

1. Bac tampon pour piscine à débordement régulant la hauteur du niveau de l'eau dans la piscine caractérisé par le fait que

   le bac tampon (1), dont le fond est agencé de manière à faire office de préfiltre et de filtre à décantation pour l'eau de la piscine au travers d'une masse filtrante (8,9), comporte une pompe aspirante (14) immergée dans un puits (6) étanche, par rapport au volume d'eau du bac tampon (1) ; le fond (7) du puits (6) étant raccordé à une ramification de crépines (5) disposées au fond du bac tampon (1) et noyées dans la masse filtrante (8,9) ; la pompe (14) étant reliée à une canalisation de sortie (10) intérieure au puits (6) pour aller, en retour, par des canalisations (11,23), alimenter la piscine en eau filtrée ; qu'il comporte un asservissement électronique (2) qui commande la pompe (14) et régule la hauteur du niveau d'eau dans le bac tampon (1), en fonction des variations de la hauteur d'eau du niveau d'eau dans la piscine dont la goulotte de débordement (12) est reliée par une canalisation (13) qui déverse l'eau qui déborde de ladite piscine dans le bac tampon (1).

**2.** Bac tampon selon la revendication 1 caractérisé par le fait

qu'il comporte un moyen de nettoyage de la masse filtrante (8, 9) par inversion du sens du courant d'eau (F2), par la canalisation (10), intérieure au puits (6) qui reçoit l'eau qui est envoyée dans un sens inverse selon la flèche F2 par inversion du sens du courant, soit par une autre pompe, soit par la pompe (14) dont le sens d'action est alors inversé, le refoulement de l'eau par les crépines (5) crée une agitation de la masse filtrante (8,9) faisant remonter les impuretés à la surface du niveau du bac tampon (1) où elles sont récupérées par débordement dans une goulotte (15), dudit bac tampon (1), et évacuées par une canalisation de vidange (24).

**3.** Bac tampon selon la revendication 2 caractérisé par le fait

que le moyen de nettoyage comporte, branchée sur la canalisation (10), une arrivée d'air compressé (16) qui entre selon la flèche F3 pour, par refoulement, créer des bulles et une agitation de la masse filtrante (8, 9), en vue du nettoyage du filtre.

**4.** Bac tampon selon l'une quelconque des revendications 1 ou 2 caractérisé par le fait

que le puits étanche (6) est fermé par un couvercle amovible étanche (17).

**5.** Bac tampon selon la revendication 1 caractérisé par le fait

que la canalisation de sortie intérieure (10) ou directement le puits étanche (6) est branché sur une arrivée d'air (16) qui est alimentée par un compresseur d'air.

## Claims

**1.** A reservoir for an overflow swimming-pool, controlling the height of the water level in said swimming-pool,
**characterized** in that
the reservoir (1), whose bottom is designed such that it forms a prefilter and a clarifying filter for the water of the swimming-pool through a filter-mass (8, 9), comprises a suction pump (14) submerged in a pipe-cased shaft (6) which is sealed from the water volume of the reservoir (1), the bottom (7) of the pipe-cased shaft (6) being connected to a suction heads branch-off (5) disposed at the bottom of the reservoir (1) and submerged in the filter mass (8, 9); the pump (14) being connected to an outlet passageway (10) in the interior of the pipe-cased shaft (6) in order to supply the swimming-pool with filtered water via passageways (11, 23) on return; in that it comprises an electronic control system (2) for controlling the pump (14) and for regulating the height of the water level in the reservoir (1) in response to the differences in water level height in the swimming-pool whose overflow gutter (12) is connected via a passageway (13) directing the overflowing water of the swimming-pool into the reservoir (1).

**2.** The reservoir according to claim 1,
characterized in that it comprises a cleaning means of the filter mass (8, 9) by reversing the direction of water flow (F2) through the passageway (10) in the interior of the pipe-cased shaft (6), which passageway receives the water delivered in an inverse direction in accordance with the arrow (F2) by reversal of the flow direction either through a different pump or through the pump (14) whose operating direction is reversed then, transfer of the water through the branch-off heads (5), causing the filter-mass (8, 9) to be agitated, thereby bringing the impurities to the surface of the level of the reservoir (1), where they are collected through overflow in an overflow gutter (15) of the reservoir (1) and are discharged through a discharge passageway (24).

**3.** The reservoir according to claim 2,
characterized in that the cleaning means comprises a compressed air supply (16) connected to the passageway (10), said air entering in accordance with the arrow (F3) in order to produce bubbles by repelling or stemming, and to cause agitation of the filter-mass (8, 9) with a view to cleaning the filter.

**4.** The reservoir according to one of claims 1 or 2,
characterized in that the sealed pipe-cased shaft (6) is closed by a removable sealing lid (17).

**5.** The reservoir according to claim 1,
characterized in that the inner outlet passageway (10) or directly the sealed pipe-cased shaft (6) is connected to an air supply (16) fed by an air compressor.

## Patentansprüche

1. Sammelgefäß für Überlaufschwimmbad, das die Höhe des Wasserspiegels in dem Schwimmbad regelt, **dadurch gekennzeichnet,**

   daß das Sammelgefäß (1), dessen Boden derart ausgebildet ist, daß es einen Vorfilter und einen Klärfilter für das Wasser des Schwimmbads durch eine Filtriermasse (8,9) hindurch bildet, eine Ansaugpumpe (14) aufweist, die in einen gegenüber dem Wasservolumen des Sammelgefässes (1) dichten Rohrschacht (6) eingetaucht ist; wobei der Boden (7) des Rohrschachts (6) mit einer Saugköpfeabzweigung (5) verbunden ist, die am Boden des Sammelgefässes (1) angeordnet ist und in die Filtriermasse (8,9) eingetaucht ist; wobei die Pumpe (14) mit einem Ausgangskanal (10) im Inneren des Rohrschachts (6) verbunden ist, um über Kanäle (11,23) beim Zückkehren das Schwimmbad mit filtriertem Wasser zu speisen; daß es ein elektronisches Regelsystem (2) aufweist, das die Pumpe (14) steuert und die Höhe des Wasserspiegels in dem Sammelgefäß (1) in Abhängigkeit der Unterschiede der Wasserhöhe des Wasserspiegels in dem Schwimmbad regelt, dessen Überlaufrinne (12) über einen Kanal (13) verbunden ist, der das überlaufende Wasser des Schwimmbads in das Sammelgefäß (1) leitet.

2. Sammelgefäß nach Anspruch 1, **dadurch gekennzeichnet,** daß es eine Reinigungseinrichtung der Filtriermasse (8,9) durch Umkehrung der Richtung des Wasserstroms (F2) durch den Kanal (10) im Inneren des Rohrschachts (6) aufweist, der das Wasser aufnimmt, das in eine umgekehrte Richtung gemäß dem Pfeil (F2) durch Umkehrung der Stromrichtung, entweder durch eine andere Pumpe oder durch die Pumpe (14), deren Wirkrichtung somit umgekehrt ist, ausgebracht wird, wobei das Zurückleiten des Wassers durch die Abzweigköpfe (5), das eine Anregung der Filtriermasse (8,9) erzeugt, die Verunreinigungen an die Oberfläche des Spiegels des Sammelgefässes (1) anhebt, wo sie durch Überlauf in eine Überlaufrinne (15) des Sammelgefässes (1) gesammelt werden und durch einen Entleerungskanal (24) ausgebracht werden.

3. Sammelgefäß nach Anspruch 2, **dadurch gekennzeichnet,** daß die Reinigungseinrichtung eine an dem Kanal (10) angeschlossene Druckluftzufuhr (16) aufweist, die gemäß dem Pfeil (F3) eintritt, um durch Zurückwerfen bzw. Stauen Blasen zu erzeugen, und eine Anregung der Filtriermasse (8,9) zu erzeugen, im Hinblick auf das Reinigen des Filters.

4. Sammelgefäß nach einem der Ansprüche 1 oder 2, **dadurch gekennzeichnet,** daß der dichte Rohrschacht (6) durch einen dichten entfernbaren Deckel (17) geschlossen ist.

5. Sammelgefäß nach Anspruch 1, **dadurch gekennzeichnet,** daß der innere Austrittskanal (10) oder direkt der dichte Rohrschacht (6) an einer Luftzufuhr (16) angeschlossen ist, die von einem Luftkompressor gespeist wird.

FIG.1

FIG.2

Fig. 3

Fig. 4

## VUE SUIVANT F

Fig.5

Fig.6